# EUROPEAN PATENT SPECIFICATION

(11) **EP 4 394 593 B1**
(45) Date of publication and mention of the grant of the patent: **10.12.2025**
(21) Application number: 24151696.2
(22) Date of filing: 12.01.2024
(51) Int. Cl.: G06F 9/451, G06F 9/445, G06F 8/71, G06F 8/20

(54) **SKIN CHANGING METHOD AND APPARATUS FOR DISPLAY INTERFACE, VEHICLE AND STORAGE MEDIUM**
VERFAHREN UND -VORRICHTUNG ZUR VERÄNDERUNGS DES SKINS EINER ANZEIGESCHNITTSTELLE, FAHRZEUG UND SPEICHERMEDIUM
PROCÉDÉ ET APPAREIL DE CHANGEMENT DE PEAU POUR INTERFACE D'AFFICHAGE, VÉHICULE ET SUPPORT D'INFORMATIONS

(30) Priority: 20.12.2023 CN 202311768624
(43) Date of publication of application: 03.07.2024
(73) Proprietor: Chongqing Changan Automobile Co., Ltd., Chongqing 400023 (CN)
(72) Inventor: Chen, Jiayuan, Jiangbei District, 400023 (CN); Yang, Ling, Jiangbei District, 400023 (CN)
(74) Representative: Barker Brettell LLP

(56) References cited:
- US-A1- 2018 210 613
- US-A1- 2019 332 398

## Description

### TECHNICAL FIELD

The present invention relates to the technical field of interface interaction, and specifically relates to a skin changing method for a display interface, a skin changing apparatus for a display interface, a vehicle and a storage medium.

### BACKGROUND

Various kinds of application software (Application, APP) are generally installed on an automobile console, and each application has a respective user interface (User Interface, UI). A user interface usually consists of a plurality of UI controls, where the UI controls can be divided into various types, such as a button type, a text type, a picture type and the like. Each type of UI control has at least one attribute. For example, a button control has attributes such as shape, font, and color. The display style of the UI control is determined by the attribute of the UI control, and the display style of the UI control can be changed by changing the attribute of the UI control (namely, realizing skin changing of the UI control), so as to realize skin changing of the user interface.

The existing skin changing method can only render skin changing of a single application via a local or network-loaded theme of the single application.

US 2019/332398 A1 provides an interface switching method, including: loading a display interface of a default style based on a preset parent theme type when an application starts; monitoring whether a data type processed by the application changes in real time operation of the application obtaining a preset child theme type corresponding to a data type currently processed by the application based on the data type currently processed by the application if the data type changes, wherein a value of an attribute name of which a display style needs to be changed relative to the parent theme type is defined in the child theme type; and switching a display style of the display interface based on the value of the attribute name defined in the child theme type and of which the display style needs to be changed relative to the parent theme type.

US 2018/210613 A discloses a display method for a multimedia terminal for an airport service and multimedia terminal. The method comprises collecting user information; classifying the user information into different target user groups on the basis of characteristic attributes of users in the user information; and calling a skin interface that matches a target user group corresponding to the user, and loading the skin interface to a terminal display page of the user.

### SUMMARY

The invention is set out in the appended set of claims. A first objective of the present invention is to provide a skin changing method for a display interface, to solve the problem in the prior art that skin changing can only be performed for a single application. A second objective is to provide a skin changing apparatus for a display interface. A third objective is to provide a vehicle. A fourth objective is to provide a computer-readable storage medium.

To achieve the above objectives, the present invention adopts the following technical solutions.

A skin changing method for a display interface includes:
acquiring, in response to an application operation for a target theme, a skin resource pack corresponding to the target theme in a target application program of an automobile console system;
determining a control type for a display interface of a plurality of application programs in the automobile console system;
performing skin changing on the display interface by applying the skin resource pack according to a skin changing flow corresponding to the control type.

Optionally, performing the skin changing on the display interface by applying the skin resource pack according to the skin changing flow corresponding to the control type includes:
when the control type is a two-dimensional control type, acquiring a view resource of the display interface;
performing the skin changing on the display interface by applying the skin resource pack according to the view resource.

Optionally, performing the skin changing on the display interface by applying the skin resource pack according to the skin changing flow corresponding to the control type includes:
when the control type is a Kanzi view type, determining color value information and image path information from the skin resource pack;
sending the color value information to a Kanzi rendering engine for rendering, and loading target image data according to the image path information;
drawing a skin-changed display interface based on rendering content of the Kanzi rendering engine and the target image data.

Optionally, performing the skin changing on the display interface by applying the skin resource pack according to the skin changing flow corresponding to the control type includes:
when the control type is a C++ application type, pausing a current drawing task, and releasing caching information;
restoring the current drawing task, and loading a texture and a model associated with the display interface according to the skin resource pack.

Optionally, before acquiring, in response to the application operation for the target theme, the skin resource pack corresponding to the target theme, the method includes:
integrating a first software development kit into the target application program, and initializing the first software development kit;
acquiring, in response to the application operation for the target theme, the skin resource pack corresponding to the target theme includes:
   invoking, in response to the application operation for the target theme, the first software development kit of the target application program to acquire the skin resource pack from a specified path.

Optionally, before performing skin changing on the display interface by applying the skin resource pack according to the skin changing flow corresponding to the control type, the method includes:
integrating a second software development kit into the plurality of application programs in the automobile console system, and initializing the second software development kit;
registering a notification message of the first software development kit;
performing the skin changing on the display interface by applying the skin resource pack according to the skin changing flow corresponding to the control type includes:
   invoking the first software development kit of the target application program to parse the skin resource pack, so as to obtain configuration information;
   generating a notification message carrying the configuration information, where the notification message is used for notifying the application programs in the automobile console system to perform skin changing;
   sending the notification message to the second software development kit of the plurality of application programs in the automobile console system, to control the plurality of application programs to perform skin changing on each display interface by adopting the configuration information according to the skin changing flow corresponding to the control type.

Optionally, before acquiring, in response to the application operation for the target theme, the skin resource pack corresponding to the target theme in the target application program of the automobile console system, the method further includes:
creating a target theme, and making a skin resource file corresponding to the target theme;
packing and compiling the skin resource file into a skin resource pack, and updating the skin resource pack to the target application program.

Optionally, before packing and compiling the skin resource file into the skin resource pack, the method further includes:
obtaining target naming information of the skin resource file;
when the target naming information complies with a preset naming rule, packing and compiling the skin resource file into the skin resource pack.

A skin changing apparatus for a display interface includes:
a skin resource pack acquisition module, configured to acquire, in response to an application operation for a target theme, a skin resource pack corresponding to the target theme in a target application program of an automobile console system;
a control type determination module configured to determine a control type for a display interface of a plurality of application programs in the automobile console system;
a skin changing module configured to perform skin changing on the display interface by applying the skin resource pack according to a skin changing flow corresponding to the control type.

Optionally, the apparatus further includes:
a target theme creation module, configured to create a target theme and make a skin resource file corresponding to the target theme;
a packing and compilation module configured to pack and compile the skin resource file into a skin resource pack, and update the skin resource pack to the target application program.

A vehicle includes a processor, a memory, and a computer program stored in the memory and capable of running on the processor. The computer program, when executed by the processor, implements steps of the skin changing method for the display interface as mentioned above.

A computer readable storage medium has a computer program stores therein. When the computer program is executed by a processor, steps of the skin changing method for the display interface as mentioned above are implemented.

The invention has the following beneficial effects.

Compared with the prior art that skin changing is only performed on a single application or interface, the present invention can achieve one-key quick skin changing for an application interface of an automobile console according to the control type for the display interface.

### BRIEF DESCRIPTION OF DRAWINGS

FIG. 1 is a flowchart illustrating steps of an embodiment of a skin changing method for a display interface according to the present invention.
FIG. 2 is a flowchart illustrating steps of another embodiment of a skin changing method for a display interface according to the present invention.
FIG. 3 is a flowchart illustrating steps of another embodiment of a skin changing method for a display interface according to the present invention.
FIG. 4 is a flowchart illustrating steps of another embodiment of a skin changing method for a display interface according to the present invention.
FIG. 5 is a flowchart illustrating steps of another embodiment of a skin changing method for a display interface according to the present invention.
FIG. 6a is a flowchart of a skin changing scheme in an embodiment of the present invention.
FIG. 6b is a flowchart illustrating a theme file generation process in an embodiment of the present invention.
FIG. 6c is a flowchart of theme switching in an embodiment of the present invention.
FIG. 6d is a schematic diagram of a skin changing flow for an android application in an embodiment of the present invention.
FIG. 6e is a schematic diagram of a skin changing flow of a Kanzi view in an embodiment of the present invention.
FIG. 6f is a schematic diagram of a skin changing flow of a C++ application in an embodiment of the present invention.
FIG. 7 is a block diagram of an embodiment of a skin changing apparatus for a display interface according to the present invention.
FIG. 8 is a schematic diagram of a processor and a storage medium in an embodiment of a vehicle according to the present invention.
FIG. 9 is a schematic diagram of a computer storage medium in an embodiment of the present invention.

### DESCRIPTION OF EMBODIMENTS

The embodiments of the present invention will be illustrated with reference to the accompanying drawings and preferred embodiments, and those skilled in the art can readily understand other advantages and efficacies of the present invention from the disclosures in this specification. The present invention may also be implemented or applied in further additional embodiments, and the details in this specification may be modified or changed in various ways based on different views and applications without departing from the scope of the present invention. It should be understood that the preferred embodiments are only for the purpose of illustrating the present invention and are not intended to limit the scope of protection of the present invention. The invention is defined by the appended independent claims. The dependent claims define preferred embodiments.

It should be noted that the illustrations provided in the following embodiments are only schematically illustrating the basic concept of the present invention, and only the components related to the present invention are shown in the illustrations, which are not drawn in accordance with the number, shape, and size of the components in actual implementation. In the actual implementation of the components, the morphology, the number, and the proportion of the components may be changed arbitrarily, and the layout of the components may also be more complex.

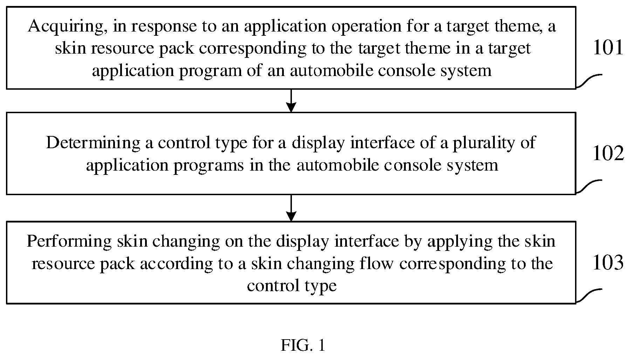

Referring to FIG. 1, a flowchart of steps of an embodiment of a skin changing method for a display interface according to the present invention is shown. The skin changing method for a display interface includes:

Step 101, acquiring, in response to an application operation for a target theme, a skin resource pack corresponding to the target theme in a target application program of an automobile console system;

Various types of applications may be included in the automobile console system, such as an APP store application, a navigation service application, a social media application, an internet radio and music service application, a vehicular remote control application, an in-vehicle telephone and text message application, an in-vehicle entertainment application, an in-vehicle information application, and the like.

In order to show the diversity of the display interface of the automobile console system, different types of themes may be set in advance for the applications of the automobile console system, and when the automobile console system uses different themes, multiple applications in the automobile console system may uniformly adopt the configuration information corresponding to the themes, to realize unified skin changing of the multiple applications.

The target application program in the automobile console system may be an application with the function of switching themes to realize skin changing, such as an application store, and after the user starts the target application program, the theme currently in use and a plurality of candidate themes to be switched are shown for the user in the target application program. The user selects, from the plurality of candidate themes, a target theme to be switched, and performs an application operation for the target theme, thereby triggering the application of the target theme.

Specifically, an application control for each candidate theme may be displayed on the interface of the target application program, and when the user clicks on the application control corresponding to the target theme after selecting the target theme, the application operation for the target theme is performed. Then, the target application program responds to the application operation to acquire the skin resource pack corresponding to the target theme. Configuration information for multiple applications in the automobile console system is included in the skin resource pack. The configuration information may include, but is not limited to, color settings, font settings, image paths, and the like.

Step 102, determining a control type for a display interface of a plurality of application programs in the automobile console system;

In the automobile console system, the display interface of the application program is composed of various types of controls; the control types for the display interface include a two-dimensional control type (such as an android application control type) and a three-dimensional control type, and the three-dimensional control type includes, but is not limited to, a Kanzi view type, a C++ application type and a Unity view type. The plurality of application programs in the automobile console system may be part or all of the application programs in the automobile console system.

After acquiring the skin resource pack, a plurality of application programs requiring theme skin changing in the automobile console system are determined, the display interface composition in each application program is analyzed, and the control type for the display interface is determined, so that the skin changing is quickly performed according to the control type.

Step 103, performing skin changing on the display interface by applying the skin resource pack according to a skin changing flow corresponding to the control type.

In the automobile console system, for each control type, the corresponding skin changing process is set in advance to establish the correspondence between the control type and the skin changing process, and then after determining the control type, the skin changing process corresponding to the control type is determined according to the correspondence between the control type and the skin changing process, and then skin changing is performed on the display interface by applying the skin resource pack according to the skin changing process.

The embodiment of the present invention may be applied to different types of display interfaces for updating, with a wide scope of application (the present invention is not limited to the skin changing of Android applications, but also applicable to application interfaces implemented by three-dimensional display modules such as C++, Kanzi, Unity, and so on), so that it may be used for the skin changing for a plurality of applications in the automobile console system to realize one-key rapid skin changing.

In one embodiment of the present invention, before acquiring, in response to the application operation for the target theme, the skin resource pack corresponding to the target theme, the method includes integrating a first software development kit into the target application program, and initializing the first software development kit.

The first software development kit (Software Development Kit, SDK) is a set of collections containing tools and libraries for developing specific software application programs. The SDK may include a compiler, a debugger, a simulator, a documentation, and sample codes and so on, to assist developers in writing, testing, and deploying the application programs.

In practice, the first software development kit may be integrated into the target application program, and after initialization of the first software development kit, the first software development kit may be used for theme switching. Specifically, the functions of the first software development kit may include, but are not limited to, acquiring a skin resource pack, parsing a skin resource pack, generating a notification message, sending a notification message, and so on.

Preferably, step 101 may specifically include: invoking, in response to the application operation for the target theme, the first software development kit of the target application program to acquire the skin resource pack from a specified path.

In practice, the user may download the skin resource pack corresponding to the target theme from the cloud in the target application program, and store the skin resource pack under the specified path locally in the automobile console system, so that when the user performs the application operation for the target theme, it is possible to invoke the first software development kit to acquire the skin resource pack according to the specified path. For example, the skin resource pack may be stored under the specified path in the form of a ThemeOptionConfig.j son file, and when the current theme is switched to the target theme, the ThemeOptionConfig.j son file may be searched for under the specified path to parse out the configuration information corresponding to the target theme. The ThemeOptionConfig.j son file is a file for configuring theme options.

The ThemeOptionConfig.j son file contains the definition of one or more themes. Each theme may contain different colors, fonts, background images, and other attributes. A theme option may be added, removed or modified by editing this file.

In one embodiment of the present invention, before the display interface of the plurality of application programs in the automobile console system is controlled in such a manner that the skin changing is performed according to the skin resource pack, a second software development kit may be integrated into the plurality of application programs in the automobile console system, and the second software development kit is initialized, and a notification message of the first software development kit is registered.

The second software development kit (Software Development Kit, SDK) is a set of collections containing tools and libraries for developing specific software application programs. The SDK may include a compiler, a debuggers, a simulator, documentation, and sample codes, and so on, to assist developers in writing, testing, and deploying the application programs.

In order to realize skin changing of an application program in an automobile console system, a second software development kit may be integrated into each application of the automobile console system, and the second software development kit is used for executing a specific skin changing flow. After the second software development kit is integrated, initialization may be performed for the second software development kit, so that the second software development kit may execute the skin changing flow. Meanwhile, a notification message of the first software development kit may be dynamically registered in the second software development kit, so that the second software development kit may receive the notification message sent by the first software development kit. In the embodiment of the present invention, both the first software development kit and the second software development kit may be integrated into the target application program, and the second software development kit may be integrated into another application program.

Specifically, the second software development kit may execute a ThemeManager initialization method; in the ThemeManager initialization method, an attachApplication( ) method may be executed, and at the same time, monitoring of an Activity lifecycle is registered, where the attachApplication( ) method may render a hook for LayoutInflater corresponding to the Application, that is, performing a hook operation, to execute custom logic in a specific lifecycle event or method of the application. During the monitoring process of the Activity lifecycle, when the Activity is destroyed, the View in a ViewWarehouse (view warehouse) may be removed; when the Activity is created, the Layoutinflater corresponding to the Activity is hooked, and monitoring of the Fragment lifecycle is registered. Activity is a basic component of an Android application program, and it is an interface for an application program to interact with a user. One Activity may include a plurality of Fragments (fragment or fragmentation) for displaying specific functions or contents. In the Activity, various operations may be performed, for example, displaying lists, editing text, displaying pictures, etc.

A view warehouse may be set for the Fragment and the Activity, for managing a view in the Fragment; when the Fragment is destroyed, the view is removed; when the Activity or the Fragment is created, a skin changing SDK (namely, the second software development kit) will intercept the creation of the view and apply the currently applied skin; if the current view is the view in the Fragment, the current view would be cached in a warehouse to which the Fragment belongs; otherwise, the current view would be cached in a warehouse to which the Activity belongs. It should be noted that, when the page is closed, the Activity is triggered to be destroyed and the Fragment is triggered to be destroyed; and when the page is switched, the Activity or the Fragment is created.

In the embodiment of the present invention, after being initialized, the second software development kit may determine a target view requiring skin changing on the display interface, and then, by intercepting the creation of the target view and applying a skin corresponding to a current application program, a latest application program is generated.

In one embodiment of the present invention, step 103 may include the following sub-steps.

Sub-step S11, invoking the first software development kit of the target application program to parse the skin resource pack, so as to obtain configuration information.

In a practical application, after the first software development kit is initialized, a skin resource pack may be acquired by using the first software development kit, and the acquired skin resource pack is parsed, to obtain the configuration information, where the configuration information may include, but is not limited to, a skin package, a wallpaper, application icon configuration, a root path of a theme package, 3D configuration, and the like.

Sub-step S12, generating a notification message carrying the configuration information, where the notification message is used for notifying the applications in the automobile console system to perform skin changing.

After the configuration information is obtained, the configuration information may be stored in a system attribute so as to modify the system attribute of the automobile console system, and the notification message is created based on the configuration information, where the notification message carries the configuration information, to notify the application program in the automobile console system to perform skin changing according to the configuration information.

Sub-step S13, sending the notification message to the second software development kit of the plurality of application programs in the automobile console system, to control the plurality of application programs to perform skin changing on each display interface by adopting the configuration information according to the skin changing flow corresponding to the control type.

After creating the notification message, the first software development kit of the target application program may broadcast and send the notification message to the second software development kit of the plurality of application programs in the automobile console system, to notify the plurality of application programs to perform skin changing according to the configuration information.

In the embodiment of the present invention, the skin resource pack corresponding to the target theme is acquired in the target application program of the automobile console system, in response to the application operation for the target theme; the control type for each display interface in the automobile console system is determined; and the skin changing is performed by applying the skin resource pack according to the skin changing flow corresponding to the control type, so that the skin changing for all application interfaces of the whole automobile console system may be realized, and the skin changing may be realized by one key.

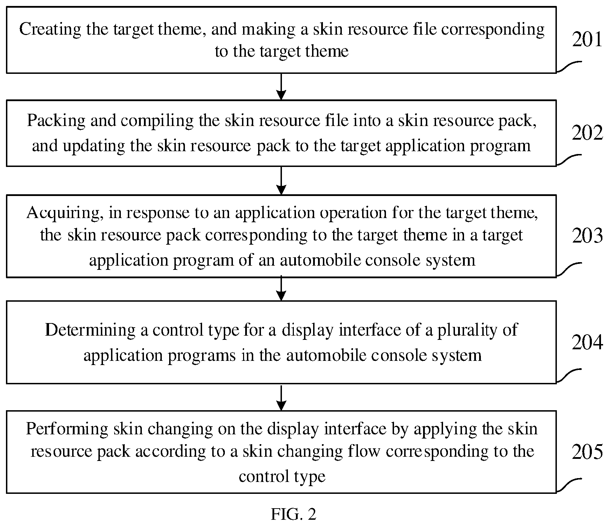

Referring to FIG. 2, a flowchart of steps of another embodiment of the skin changing method for the display interface according to the present invention is shown. The skin changing method for the display interface includes the following steps.

Step 201, creating a target theme, and making a skin resource file corresponding to the target theme.

The target theme may be a theme for skin changing of all applications in the automobile console system.

In practical applications, the automobile console system may be connected to a theme management platform, and the theme management platform may include a theme uploading module and a theme file generation module; the theme uploading module of the theme management platform may provide a resource uploading entrance to a UI designer in the form of a web page; the UI designer may create a new theme according to a template, and produce all theme skin resource files under the theme; and after the production is completed, the UI designer may upload the designed theme skin resource files to the theme management platform in a predetermined manner.

Specifically, when uploading the theme skin resource files, a corresponding theme name may be selected from the theme management platform for uploading; resources of different display interfaces are distinguished based on a file naming mode, for example, a UI resource of a desktop uses an English name of the desktop as a prefix of the resource file. The file prefix is followed by the category name of the control, e. g., progress bar, input box, etc., and then the resource file category picture, video, color, etc. For a specific attribute of a specific control of the same page, the name of the resource file thereof may be set to be unified across the skins of all themes.

Step 202, packing and compiling the skin resource file into a skin resource pack, and updating the skin resource pack to the target application program.

The theme management platform may generate the skin resource pack corresponding to the skin resource file in an automatic packing manner, where the skin resource file is skin resource configuration filled in by a designer on a design page, and a packing and compiling process is to compile the skin resource file into a resource packet executable by the automobile console system. After generating the skin resource pack, the packaged skin resource pack may be updated to the target application program.

Specifically, in the packing process, a privatized Jenkins may be used to automatically package a theme resource project containing various application modules and 3D modules, and a gradle task is configured via build.gradle in the packing process, to support multi-channel packaging, so that a plurality of skin resource packs in different scenarios may be obtained, for example, skin resource packs in a daytime scenario and a night scenario may be simultaneously generated through multi-channel packaging.

The multi-channel packaging refers to that a same application program is packaged and published through different channels. In the development of mobile applications, different channels may correspond to different application stores, distribution platforms, or specific groups of users. The following describes steps of implementing multi-channel packaging in Jenkins.
(1) Configuring a construction environment: in Jenkins, different construction environments may be created for different channels. In a configuration page of each construction project, an environment variable or a configuration file may be added for distinguishment of a different channel.
(2) Configuring a construction step: in the configuration page of the construction project, the construction step may be added to execute a packaging operation. Here, the packaging operation can be executed by a selection to execute a shell script or a batch command.
(3) Configuring a publishing target: in the configuration page of the construction project, the publishing target may be configured. Here, a packaged application program may be selected to be published to a specified directory or a remote server.
(4) Configuring labels: in Jenkins, labels may be added for different construction projects. With the labels, different channels or versions may be identified.
(5) Running the construction project: after the configuration of the construction project is completed, a "Construct immediately" button may be clicked to run the construction project. Jenkins will automatically execute the packaging task and publish the result to a designated location.
(6) Distributing application programs: according to different channels and labels, the packaged application programs may be distributed to different platforms or user groups.

After the skin resource pack is generated, the skin resource pack may be updated to the target application program, to display a newly created target theme in the target application program. In practical applications, the skin resource pack generated by packaging may be sent to a cloud server for storage, and the target theme corresponding to the skin resource is updated into the target application program; and when a user executes a download operation of the target theme in the target application program, the skin resource pack corresponding to the target theme may be downloaded from the cloud server.

The theme management platform provided in the embodiment of the present invention can decouple a process for making a skin changing resource from a process for generating a skin changing file; the designer does not need to have a programming capability, and only needs to design a style of a display interface and make a resource; after the theme creation is completed and the approval after the submission thereof is passed, the skin pack resources are automatically packaged, made into a theme file, and uploaded to a digital application mall for downloading and use by the user.

In one embodiment of the present invention, before packing and compiling the skin resource file into the skin resource pack, the skin changing method for the display interface further includes: obtaining target naming information of the skin resource file; and when the target naming information complies with a preset naming rule, packing and compiling the skin resource file into the skin resource pack.
Step 203, acquiring, in response to an application operation for the target theme, the skin resource pack corresponding to the target theme in a target application program of an automobile console system;
Step 204, determining a control type for a display interface of a plurality of application programs in the automobile console system;
Step 205, performing skin changing on the display interface by applying the skin resource pack according to a skin changing flow corresponding to the control type.

In the embodiment of the present invention, decoupling of theme creation from the theme skin changing application may be realized to facilitate rapid theme creation and application.

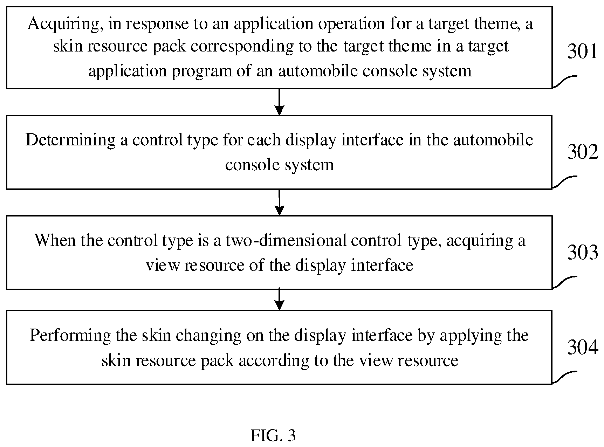

Referring to FIG. 3, a flowchart of steps of another embodiment of a skin changing method for a display interface according to the present invention is shown. The skin changing method for a display interface includes the following steps.

Step 301, acquiring, in response to an application operation for a target theme, a skin resource pack corresponding to the target theme in a target application program of an automobile console system.

Step 302, determining a control type for each display interface in the automobile console system.

Step 303, when the control type is a two-dimensional control type, acquiring a view resource of the display interface.

When the control type is the two-dimensional control type, the view resource requiring skin changing on the display interface may be intercepted in the automobile console system.

Step 304, performing the skin changing on the display interface by applying the skin resource pack according to the view resource.

After the view resource requiring skin changing is intercepted, the skin resource pack is parsed, and then the skin changing of the display interface is realized by modifying the view resource.

For example, when the second software development kit of the android applications monitors the theme switching, the view warehouse for the currently visible page executes the skin application operation, that is, traversing the views to acquire the resource required by the current view and applying the resource.

In the embodiment of the invention, the skin resource pack corresponding to the target theme is acquired in the target application program of the automobile console system, in response to the application operation for the target theme; the control type for each display interface in the automobile console system is determined; when the control type is the two-dimensional control type, the view resource of the display interface is acquired; the skin changing is performed by applying the skin resource pack according to the view resource. Therefore, it is possible to realize one-key skin changing for the display interface of the two-dimensional control type in the whole automobile console.

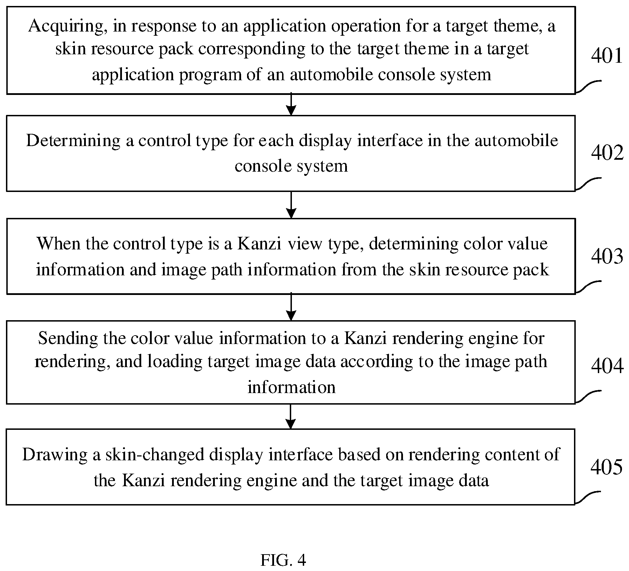

Referring to FIG. 4, a flowchart of steps of another embodiment of a skin changing method for a display interface according to the present invention is shown. The skin changing method for a display interface includes the following steps.

Step 401, acquiring, in response to an application operation for a target theme, a skin resource pack corresponding to the target theme in a target application program of an automobile console system.

Step 402, determining a control type for each display interface in the automobile console system.

Step 403, when the control type is a Kanzi view type, determining color value information and image path information from the skin resource pack.

The image path information may include, but is not limited to, a two-dimensional picture path and a three-dimensional KZB path.

The first software development kit may parse the skin resource pack to obtain the configuration information, and may create, in the target application program, the notification message carrying the configuration information, and send the notification message to the second software development kit of each application program; and when the display interface with the Kanzi view type monitors theme switching at the second software development kit, the display interface with the Kanzi view type reads the configuration information to execute skin changing. The configuration information may include the color value information and the image path information.

Step 404, sending the color value information to a Kanzi rendering engine for rendering, and loading target image data according to the image path information.

After reading the color value information, the color value information may be delivered by a JNI to the Kanzi rendering engine for rendering; Kanzi is a software engine for rendering 3D graphics, which receives a color value and other rendering data and converts them to final image output. By sending the color value information to the Kanzi rendering engine, rendering and visualization of the 3D scenario may be achieved. The image path information is used to asynchronously load images and KZB (3D related images).

Step 405, drawing a skin-changed display interface based on rendering content of the Kanzi rendering engine and the target image data.

When the images and KZB are loaded successfully, the current rendering session ends and a new view is to be drawn; when the images and KZB are loaded and recognized, the skin changing flow is aborted.

In the embodiment of the invention, he skin resource pack corresponding to the target theme is acquired in the target application program of the automobile console system, in response to the application operation for the target theme; the control type for each display interface in the automobile console system is determined; when the control type is the Kanzi view type, the color value information and the image path information are determined from the skin resource pack; the color value information is sent to the Kanzi rendering engine for rendering, and the target image data is loaded according to the image path information; the skin-changed display interface is drawn based on the rendering content of the Kanzi rendering engine and on the target image data. Therefore, it is possible to realize the one-key skin changing for the display interface of the Kanzi view type in the whole automobile console.

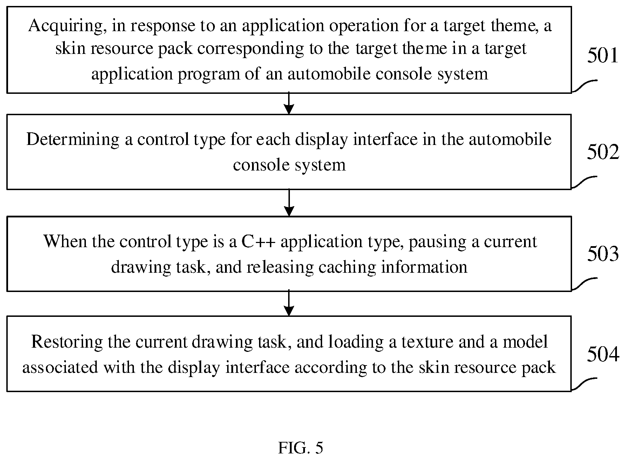

Referring to FIG. 5, a flowchart of steps of another embodiment of a skin changing method for a display interface according to the present invention is shown. The skin changing method for a display interface includes the following steps.

Step 501, acquiring, in response to an application operation for a target theme, a skin resource pack corresponding to the target theme in a target application program of an automobile console system.

Step 502, determining a control type for each display interface in the automobile console system.

Step 503, when the control type is a C++ application type, pausing a current drawing task, and releasing caching information.

When the control type for the display interface is the C++ application type, drawing of the model in the current display interface is stopped and the drawn caching information is released. The drawn caching information may include model caching information and texture caching information, etc.

Step 504, restoring the current drawing task, and loading a texture and a model associated with the display interface according to the skin resource pack.

After the caching information is released, then a drawing task may be restored, and the drawing task for the skin-changed model is re-executed. In the drawing task, the texture and the model of the new skin of the display interface may be loaded according to the skin resource pack, thereby realizing skin changing for the display interface.

In the embodiment of the invention, the skin resource pack corresponding to the target theme is acquired in the target application program of the automobile console system, in response to the application operation for the target theme; the control type for each display interface in the automobile console system is determined; when the control type is the C++ application type, the current drawing task is paused, and the caching information is released; the current drawing task is restored, and the texture and the model are loaded according to the skin resource pack. Therefore, it is possible to realize one-key skin changing for the display interface of the C++ application type in the whole automobile console.

In order to provide those skilled in the art with a better understanding of the embodiments of the present invention, examples are given below for illustration.

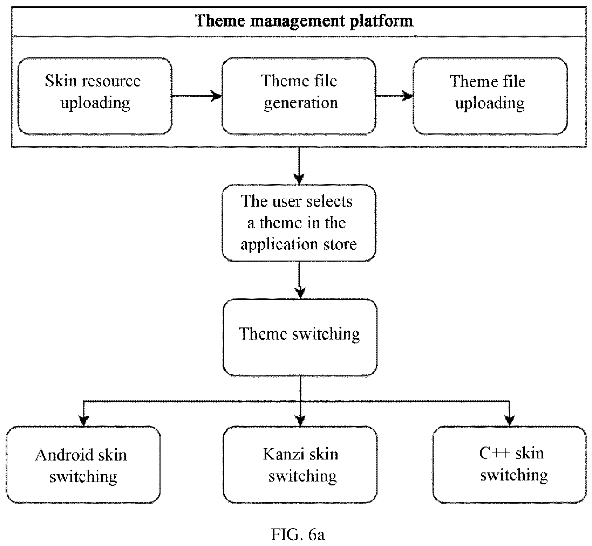

As shown in FIG. 6a, a flowchart of a skin changing scheme in an embodiment of the present invention is shown, which may include: performing skin resource uploading, theme file (i.e., skin resource pack) generation, and theme file uploading in the theme management platform; and when the user selects a target theme in the application store, triggering theme switching and then performing skin changing according to the type of the display interface of each application, for example, executing Android skin switching, Kanzi view skin switching and C++ application skin switching.

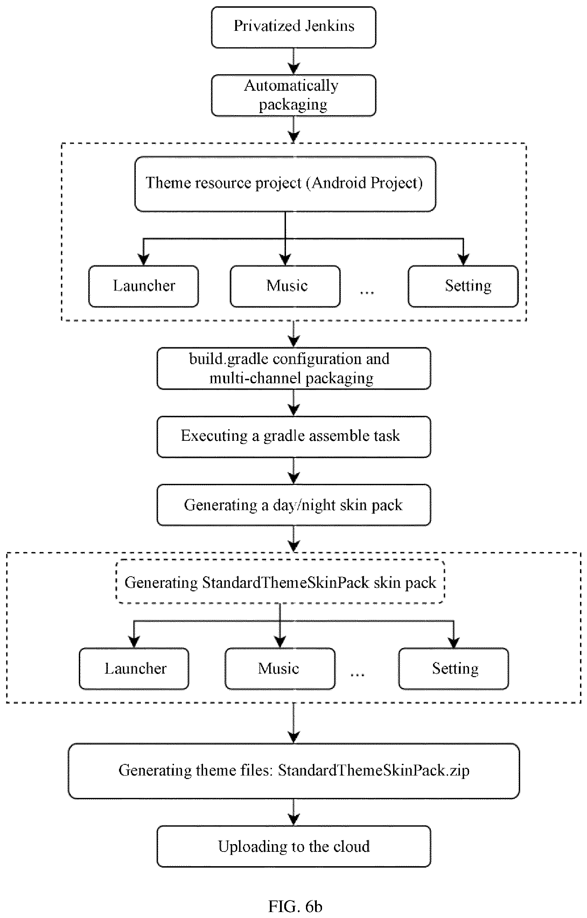

As shown in FIG. 6b, a flowchart of a theme file generation process in an embodiment of the present invention is shown. In the theme management platform, the privatized Jenkins will be able to automatically package the theme resource project, where the theme resource project involves templates for applications such as the desktop launcher Launcher, the music player Music, and the setting application (setting), and so on. Multi-channel packaging is supported via the build.gradle configuration, the gradle assemble task is executed, a day or night (day/night) skin pack is generated, and then a StandardThemeSkinPack skin pack is generated, and the theme files, StandardThemeSkinPack.zip (i.e. skin pack resources), are generated based on the StandardThemeSkinPack skin pack, and uploaded to the cloud.

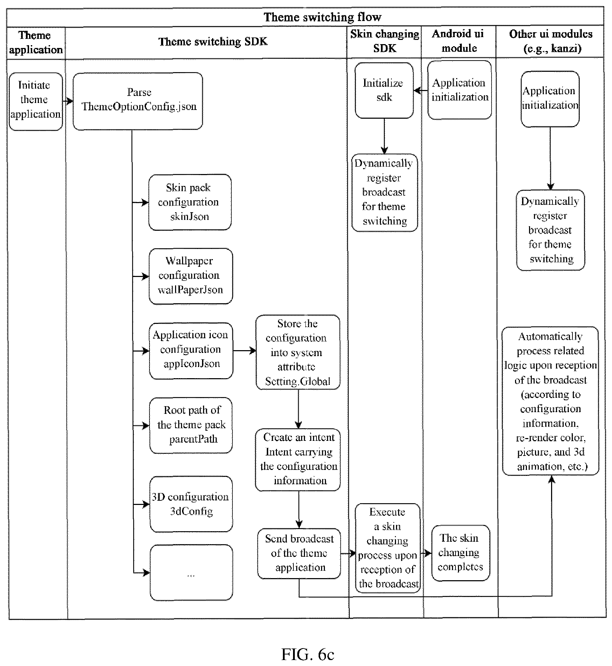

As shown in FIG. 6c, a flowchart of theme switching in an embodiment of the present invention is shown. When the theme application is initiated in the application store (i.e., the target application program), the theme switching SDK (i.e., the first software development kit) of the application store parses the ThemeOptionConfig.json file (the configuration-associated file under the locally specified path) to get the configuration information such as the skin pack configuration, the wallpaper configuration, the application icon configuration, the root path of the theme pack, the 3D configuration, and so on, and then stores the configuration information into the system attribute (Setting.Global); the application store creates Intent (intent) carrying the configuration information and sends the broadcast (i.e., notification message) of the theme application to notify each application.

In the application program, the application initialization may be performed in the Android ui module, and the skin changing SDK (i.e., the second software development kit) is initialized, and the broadcast (i.e., notification message) for theme switching is dynamically registered. The application initialization may also be performed in other ui modules (e.g., kanzi), and the broadcast for theme switching is dynamically registered.

After the skin changing SDK receives the broadcast, the skin changing flow is performed in the Android ui module; after other ui modules (e.g., kanzi) receive the broadcast, they automatically process the related logic.

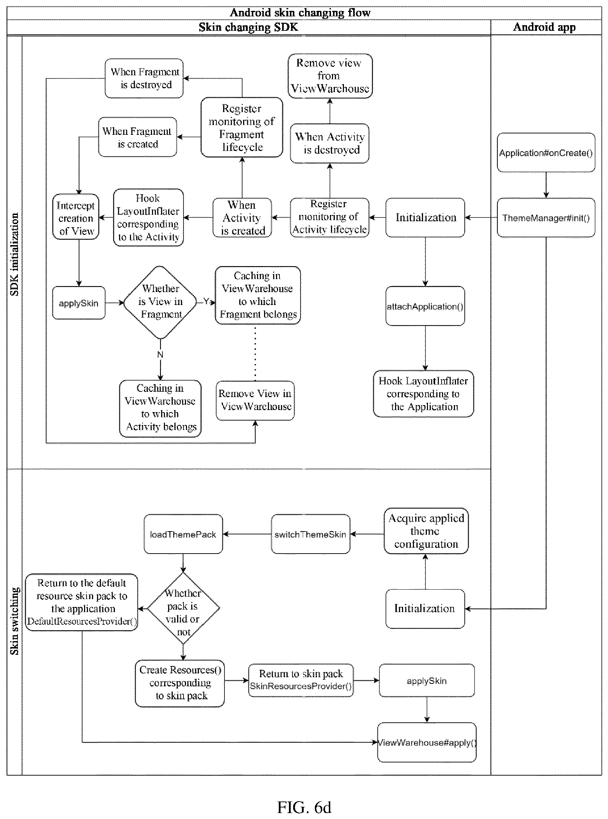

As shown in FIG. 6d, a schematic diagram of a skin changing flow of an android application in an embodiment of the present invention is shown. The skin changing flow of the Android application may include initialization and skin switching. Firstly, the initialization is performed. When the application program is started, the ThemeManager initialization method may be executed, where the attachApplication( ) method is executed and monitoring of the Activity lifecycle is registered to remove the view (View) from the warehouse when the Activity is destroyed. In particular, since the Activity may hold a large number of Fragments, specialized view management in the Fragments will reduce memory footprint and avoid problems such as memory leaks. As shown in FIG. 6d, the Fragment, like the Activity, has a dedicated repository for managing the view in the Fragment, and the view is removed when the Fragment is destroyed. When the Activity or Fragment is created, the skin changing SDK intercepts the creation of the view and applies the currently applied skin; if the current view is the view in the Fragment, the current view is cached in a warehouse to which the Fragment belongs; otherwise, the current view is cached in a warehouse to which the Activity belongs. Next, after the application receives monitoring of the skin changing, the view warehouse for the currently visible page executes the skin application operation, that is, traversing the views to acquire the resource required by the current view and applying the resource. And thus, the Android skin changing flow ends.

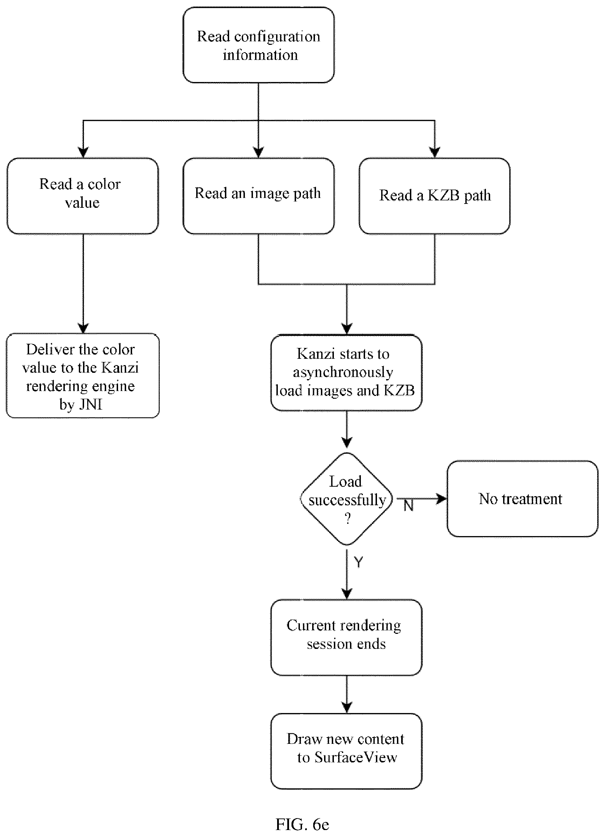

As shown in FIG. 6e, a schematic diagram of a skin changing flow of a Kanzi view in an embodiment of the present invention is shown. When the application holding the Kanzi view receives the monitoring of theme switching, the application holding the Kanzi view firstly reads the configuration information (obtained from monitoring at the skin changing SDK), which includes the color value, the image path, and the KZB path. Among them, the color value will be delivered to the Kanzi rendering engine by JNI; after the image path and the KZB path are read, Kanzi starts to asynchronously load images and KZB (3D related images) according to these paths, and when the images and the KZB are loaded successfully, the current rendering session ends and the new content is drawn to the SurfaceView. And thus, the Kanzi skin changing flow ends. SurfaceView is a special view in Android (android) for displaying, in the application program, complex graphics and animations requiring frequent updates. It provides a mechanism for dedicated optimization of the interaction between a rendering thread and a user interface thread.

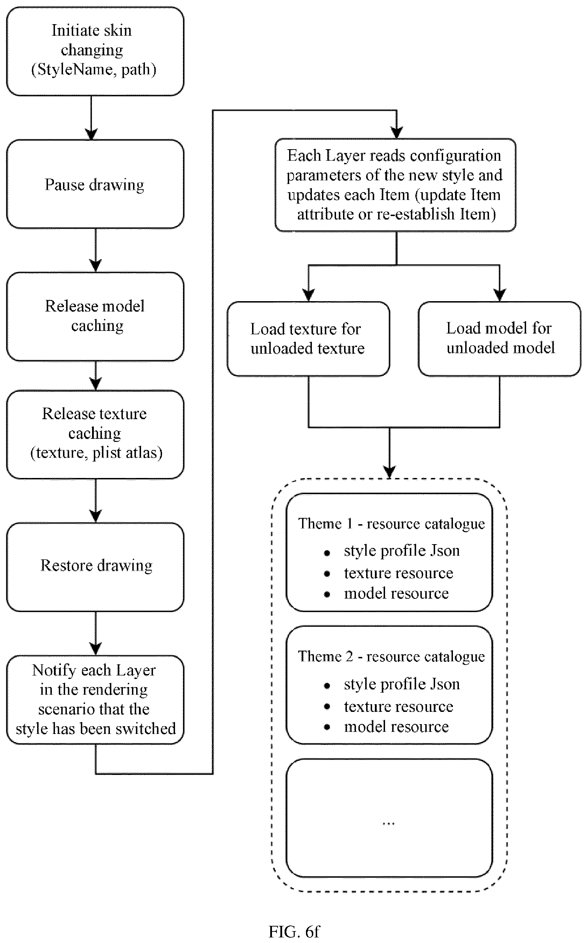

As shown in FIG. 6f, a schematic diagram of a skin changing flow of a C++ application in an embodiment of the present invention is shown; when the C++ view application receives the monitoring of theme switching, the current drawing is firstly paused, the model caching is released, the texture caching is released, and the drawing is restored. Secondly, each Layer stratum in the rendering scenario is notified that the style has been switched, and each Layer reads the configuration parameters of the new style and updates each element (texture and model loading). And thus, the C++ skin changing flow ends.

It should be noted that the method embodiments are expressed as a series of action combinations for the sake of simple description, but the person skilled in the art should be aware that the embodiments of the present invention are not limited by the described action order, because some steps may be performed simultaneously or in other order according to the embodiments of the present invention. Secondly, the person skilled in the art should also be aware that the embodiments described in the specification are preferred embodiments, and the actions involved may not be necessary to the embodiments of the present invention.

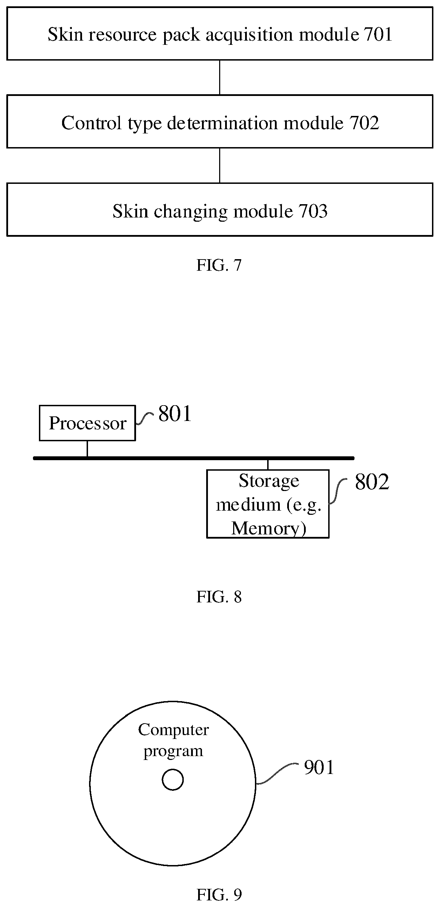

As shown in FIG. 7, a structural block diagram of an embodiment of a skin changing apparatus for a display interface in the present invention is shown. The skin changing method for a display interface includes:
a skin resource pack acquisition module 701, configured to acquire, in response to an application operation for a target theme, a skin resource pack corresponding to the target theme in a target application program of an automobile console system;
a control type determination module 702 configured to determine a control type for a display interface of a plurality of application programs in the automobile console system;
a skin changing module 703 configured to perform skin changing on the display interface by applying the skin resource pack according to a skin changing flow corresponding to the control type.

In one embodiment of the present invention, the skin changing module may include the following sub-modules:
a view resource acquisition sub-module configured to acquire a view resource of the display interface when the control type is a two-dimensional control type;
a first skin changing sub-module configured to perform the skin changing on the display interface by applying the skin resource pack according to the view resource.

In one embodiment of the present invention, the skin changing module may include the following sub-modules:
a configuration classification sub-module configured to determine color value information and image path information from the skin resource pack when the control type is a Kanzi view type;
a configuration information processing sub-module configured to send the color value information to a Kanzi rendering engine for rendering, and load target image data according to the image path information;
a second skin changing sub-module configured to draw a skin-changed display interface based on rendering content of the Kanzi rendering engine and the target image data.

In one embodiment of the present invention, the skin changing module may include the following sub-modules:
a pause and release sub-module configured to pause a current drawing task and release caching information when the control type is a C++ application type;
a drawing restoration sub-module configured to restore the current drawing task, and load a texture and a model associated with the display interface according to the skin resource pack.

In one embodiment of the present invention, the apparatus includes:
a first software development kit initialization module configured to integrate a first software development kit into the target application program, and initialize the first software development kit;
where the skin resource pack acquisition module 701 is specifically configured to invoke the first software development kit of the target application program to acquire the skin resource pack from a specified path, in response to the application operation for the target theme.

In one embodiment of the present invention, the apparatus further includes:
a second software development kit initialization module configured to integrate a second software development kit into the plurality of application programs in the automobile console system, and initialize the second software development kit;
a notification message registering module configured to register a notification message of the first software development kit;
where the skin changing module 703 may include:
   a skin resource pack parsing sub-module configured to invoke the first software development kit of the target application program to parse the skin resource pack, so as to obtain configuration information;
   a notification message generation sub-module configured to generate a notification message carrying the configuration information; where the notification message is used for notifying the applications in the automobile console system to perform skin changing;
   a notification message sending sub-module configured to send the notification message to the second software development kit of the plurality of application programs in the automobile console system, to control the plurality of application programs to perform skin changing according to the configuration information.

In one embodiment of the present invention, the apparatus further includes:
a target theme creating module configured to create a target theme, and make a skin resource file corresponding to the target theme;
a packing and compiling module configured to pack and compile the skin resource file into a skin resource pack, and update the skin resource pack to the target application program.

In one embodiment of the present invention, the apparatus further includes:
a target naming information acquisition module configured to obtain target naming information of the skin resource file;
a naming information review module configured to pack and compile the skin resource file into the skin resource pack when the target naming information complies with a preset naming rule.

As shown in FIG. 8, an embodiment of the present invention further provides a vehicle, which includes:
a processor 801 and a storage medium (e.g. memory) 802; where the storage medium (e.g. memory) 802 has, stored therein, a computer program executable by the processor 801, and when an electronic device is in operation, the processor 801 executes the computer program to perform the skin changing method for the display interface as described in any one of the embodiments of the present invention. The skin changing method for the display interface includes:
   acquiring, in response to an application operation for a target theme, a skin resource pack corresponding to the target theme in a target application program of an automobile console system;
   determining a control type for a display interface of a plurality of application programs in the automobile console system;
   performing skin changing on the display interface by applying the skin resource pack according to a skin changing flow corresponding to the control type.

Optionally, performing the skin changing on the display interface by applying the skin resource pack according to the skin changing flow corresponding to the control type includes:
when the control type is a two-dimensional control type, acquiring a view resource of the display interface;
performing the skin changing on the display interface by applying the skin resource pack according to the view resource.

Optionally, performing the skin changing on the display interface by applying the skin resource pack according to the skin changing flow corresponding to the control type includes:
when the control type is a Kanzi view type, determining color value information and image path information from the skin resource pack;
sending the color value information to a Kanzi rendering engine for rendering, and loading target image data according to the image path information;
drawing a skin-changed display interface based on rendering content of the Kanzi rendering engine and the target image data.

Optionally, performing the skin changing on the display interface by applying the skin resource pack according to the skin changing flow corresponding to the control type includes:
when the control type is a C++ application type, pausing a current drawing task, and releasing caching information;
restoring the current drawing task, and loading a texture and a model associated with the display interface according to the skin resource pack.

Optionally, before acquiring, in response to the application operation for the target theme, the skin resource pack corresponding to the target theme, the method includes:
integrating a first software development kit into the target application program, and initializing the first software development kit;
acquiring, in response to the application operation for the target theme, the skin resource pack corresponding to the target theme includes:
   invoking, in response to the application operation for the target theme, the first software development kit of the target application program to acquire the skin resource pack from a specified path.

Optionally, before performing skin changing on the display interface by applying the skin resource pack according to the skin changing flow corresponding to the control type, the method includes:
integrating a second software development kit into the plurality of application programs in the automobile console system, and initializing the second software development kit;
registering a notification message of the first software development kit;
performing the skin changing on the display interface by applying the skin resource pack according to the skin changing flow corresponding to the control type includes:
   invoking the first software development kit of the target application program to parse the skin resource pack, so as to obtain configuration information;
   generating a notification message carrying the configuration information, where the notification message is used for notifying the application programs in the automobile console system to perform skin changing;
   sending the notification message to the second software development kit of the plurality of application programs in the automobile console system, to control the plurality of application programs to perform skin changing on each display interface by adopting the configuration information according to the skin changing flow corresponding to the control type.

Optionally, before acquiring, in response to the application operation for the target theme, the skin resource pack corresponding to the target theme in the target application program of the automobile console system, the method further includes:
creating a target theme, and making a skin resource file corresponding to the target theme;
packing and compiling the skin resource file into a skin resource pack, and updating the skin resource pack to the target application program.

Optionally, before packing and compiling the skin resource file into the skin resource pack, the method further includes:
obtaining target naming information of the skin resource file;
when the target naming information complies with a preset naming rule, packing and compiling the skin resource file into the skin resource pack.

The aforementioned memory may include a Random Access Memory (RAM) or may include a non-volatile memory (non-volatile memory), such as at least one disk memory. Optionally, the memory may also be at least one storage device located away from the aforementioned processor.

The aforementioned processor may be a general-purpose processor, including a central processing unit (Central Processing Unit, referred to as CPU), a network processor (Network Processor, referred to as NP), etc.; may also be a digital signal processor (Digital Signal Processor, referred to as DSP), an application specific integrated circuit (Application Specific Integrated Circuit, referred to as ASIC), a field-programmable gate array (Field-Programmable Gate Array, referred to as FPGA) or other programmable logic devices, discrete gate or transistor logic devices, discrete hardware components.

As shown in FIG. 9, an embodiment of the present invention further provides a computer-readable storage medium 901. The computer-readable storage medium 901 stores a computer program thereon, and when the computer program is executed by a processor, the skin changing method for the display interface as described in any one of the embodiments of the present invention is performed. The skin changing method for the display interface includes:
acquiring, in response to an application operation for a target theme, a skin resource pack corresponding to the target theme in a target application program of an automobile console system;
determining a control type for a display interface of a plurality of application programs in the automobile console system;
performing skin changing on the display interface by applying the skin resource pack according to a skin changing flow corresponding to the control type.

Optionally, performing the skin changing on the display interface by applying the skin resource pack according to the skin changing flow corresponding to the control type includes:
when the control type is a two-dimensional control type, acquiring a view resource of the display interface;
performing the skin changing on the display interface by applying the skin resource pack according to the view resource.

Optionally, performing the skin changing on the display interface by applying the skin resource pack according to the skin changing flow corresponding to the control type includes:
when the control type is a Kanzi view type, determining color value information and image path information from the skin resource pack;
sending the color value information to a Kanzi rendering engine for rendering, and loading target image data according to the image path information;
drawing a skin-changed display interface based on rendering content of the Kanzi rendering engine and the target image data.

Optionally, performing the skin changing on the display interface by applying the skin resource pack according to the skin changing flow corresponding to the control type includes:
when the control type is a C++ application type, pausing a current drawing task, and releasing caching information;
restoring the current drawing task, and loading a texture and a model associated with the display interface according to the skin resource pack.

Optionally, before acquiring, in response to the application operation for the target theme, the skin resource pack corresponding to the target theme, the method includes:
integrating a first software development kit in the target application program, and initializing the first software development kit;
acquiring, in response to the application operation for the target theme, the skin resource pack corresponding to the target theme includes:
   invoking, in response to the application operation for the target theme, the first software development kit of the target application program to acquire the skin resource pack from a specified path.

Optionally, before performing skin changing on the display interface by applying the skin resource pack according to the skin changing flow corresponding to the control type, the method includes:
integrating a second software development kit into the plurality of application programs in the automobile console system, and initializing the second software development kit;
registering a notification message of the first software development kit;
performing the skin changing on the display interface by applying the skin resource pack according to the skin changing flow corresponding to the control type includes:
   invoking the first software development kit of the target application program to parse the skin resource pack, so as to obtain configuration information;
   generating a notification message carrying the configuration information, where the notification message is used for notifying the application programs in the automobile console system to perform skin changing;
   sending the notification message to the second software development kit of the plurality of application programs in the automobile console system, to control the plurality of application programs to perform skin changing on each display interface by adopting the configuration information according to the skin changing flow corresponding to the control type.

Optionally, before acquiring, in response to the application operation for the target theme, the skin resource pack corresponding to the target theme in the target application program of the automobile console system, the method further includes:
creating a target theme, and making a skin resource file corresponding to the target theme;
packing and compiling the skin resource file into a skin resource pack, and updating the skin resource pack to the target application program.

Optionally, before packing and compiling the skin resource file into the skin resource pack, the method further includes:
obtaining target naming information of the skin resource file;
when the target naming information complies with a preset naming rule, packing and compiling the skin resource file into the skin resource pack.

The embodiments in the specification are described in a progressive manner, with each embodiment focusing on the differences from the other embodiments, and cross reference can be made to the respective embodiments for the same and similar parts therebetween.

It should be understood by those skilled in the art that embodiments of the present invention may provide methods, apparatus, or computer program products. Thus, embodiments of the present invention may take the form of fully hardware embodiments, fully software embodiments, or embodiments combining software and hardware aspects. Further, embodiments of the present invention may take the form of a computer program product implemented on one or more computer-usable storage media (including, but not limited to, disk memory, CD-ROM, optical memory, etc.) containing computer-usable program codes therein.

Embodiments of the present invention are described with reference to flowcharts and/or block diagrams of methods, terminal devices (systems), and computer program products according to embodiments of the present invention. It is to be understood that each of the processes and/or blocks in the flowchart and/or block diagram, and the combination of processes and/or blocks in the flowchart and/or block diagram, may be implemented by computer program instructions. These computer program instructions may be provided to a processor of a general-purpose computer, a special-purpose computer, an embedded processor, or other programmable data-processing terminal device to produce a machine, such that the instructions executed by the processor of the computer or other programmable data-processing terminal device produce a device for carrying out the specified functions in one or more processes of the flowchart and/or one or more blocks of the block diagram.

These computer program instructions may also be stored in a computer-readable memory capable of directing the computer or other programmable data processing terminal device to operate in a particular manner, such that the instructions stored in the computer-readable memory produce a manufacture containing an instruction device. The instruction device implements the specified function in one or more processes of the flowchart and/or one or more blocks of the block diagram.

These computer program instructions may also be loaded onto a computer or other programmable data processing terminal device, such that a series of operational steps are performed on the computer or other programmable terminal device to produce computer-implemented processing, such that the instructions executed on the computer or other programmable terminal device provide steps for implementing a specified function in one or more processes of the flowchart and/or one or more blocks of the block diagram.

The above embodiments are only the preferred embodiments cited for the purpose of fully illustrating the present invention, and the protection scope of the present invention is not limited thereto.

## Claims

1. A skin changing method for a display interface, **characterized in that**, comprising:
acquiring (101, 203, 301, 401, 501), in response to an application operation for a target theme, a skin resource pack corresponding to the target theme in a target application program of an automobile console system;
determining (102, 204, 302, 402, 502) a control type for a display interface of a plurality of application programs in the automobile console system, wherein the control type comprises at least one of a two-dimensional control type, a Kanzi view type, a C++ application type or a Unity view type;
performing (103, 205) skin changing on the display interface by applying the skin resource pack according to a skin changing flow corresponding to the control type;
wherein the skin changing flow is set in advance for each control type, and the skin changing flow corresponding to the control type is determined according to a correspondence between the control type and the skin changing flow.

2. The method according to claim 1, wherein performing (103, 205) the skin changing on the display interface by applying the skin resource pack according to the skin changing flow corresponding to the control type comprises:
when the control type is the two-dimensional control type, acquiring (303) a view resource of the display interface;
performing (304) the skin changing on the display interface by applying the skin resource pack according to the view resource.

3. The method according to claim 1, wherein performing (103, 205) the skin changing on the display interface by applying the skin resource pack according to the skin changing flow corresponding to the control type comprises:
when the control type is the Kanzi view type, determining (403) color value information and image path information from the skin resource pack;
sending (404) the color value information to a Kanzi rendering engine for rendering, and loading target image data according to the image path information;
drawing (405) a skin-changed display interface based on rendering content of the Kanzi rendering engine and the target image data.

4. The method according to claim 1, wherein performing (103, 205) the skin changing on the display interface by applying the skin resource pack according to the skin changing flow corresponding to the control type comprises:
when the control type is the C++ application type, pausing (503) a current drawing task, and releasing caching information;
restoring (504) the current drawing task, and loading a texture and a model associated with the display interface according to the skin resource pack.

5. The method according to any one of claims 1 to 4, wherein before acquiring (101, 203, 301, 401, 501), in response to the application operation for the target theme, the skin resource pack corresponding to the target theme, the method comprises:
integrating a first software development kit into the target application program, and initializing the first software development kit;
acquiring, in response to the application operation for the target theme, the skin resource pack corresponding to the target theme comprises:
invoking, in response to the application operation for the target theme, the first software development kit of the target application program to acquire the skin resource pack from a specified path.

6. The method according to claim 5, wherein before performing (103, 205) the skin changing on the display interface by applying the skin resource pack according to the skin changing flow corresponding to the control type, the method comprises:
integrating a second software development kit into the plurality of application programs in the automobile console system, and initializing the second software development kit;
registering a notification message of the first software development kit;
performing the skin changing on the display interface by applying the skin resource pack according to the skin changing flow corresponding to the control type comprises:
invoking the first software development kit of the target application program to parse the skin resource pack, so as to obtain configuration information;
generating a notification message carrying the configuration information, wherein the notification message is used for notifying the application programs in the automobile console system to perform skin changing;
sending the notification message to the second software development kit of the plurality of application programs in the automobile console system, to control the plurality of application programs to perform skin changing on each display interface by adopting the configuration information according to the skin changing flow corresponding to the control type.

7. The method according to any one of claims 1 to 4, wherein before acquiring (101, 203, 301, 401, 501), in response to the application operation for the target theme, the skin resource pack corresponding to the target theme in the target application program of the automobile console system, the method further comprises:
creating (201) a target theme, and making a skin resource file corresponding to the target theme;
packing (202) and compiling the skin resource file into a skin resource pack, and updating the skin resource pack to the target application program.

8. The method according to claim 7, wherein before packing (202) and compiling the skin resource file into the skin resource pack, the method further comprises:
obtaining target naming information of the skin resource file;
when the target naming information complies with a preset naming rule, packing and compiling the skin resource file into the skin resource pack.

9. A skin changing apparatus for a display interface, the apparatus comprising:
a skin resource pack acquisition module (701), configured to acquire, in response to an application operation for a target theme, a skin resource pack corresponding to the target theme in a target application program of an automobile console system;
a control type determination module (702), configured to determine a control type for a display interface of a plurality of application programs in the automobile console system, wherein the control type comprises at least one of a two-dimensional control type, a Kanzi view type, a C++ application type or a Unity view type;
a skin changing module (703), configured to perform skin changing on the display interface by applying the skin resource pack according to a skin changing flow corresponding to the control type;
wherein the skin changing flow is set in advance for each control type, and the skin changing flow corresponding to the control type is determined according to a correspondence between the control type and the skin changing flow.

10. The apparatus according to claim 9, further comprising:
a target theme creation module, configured to create the target theme and make a skin resource file corresponding to the target theme;
a packing and compilation module, configured to pack and compile the skin resource file into a skin resource pack, and update the skin resource pack to the target application program.

11. The apparatus according to claim 9, wherein the skin changing module (703) includes the following sub-modules:
a view resource acquisition sub-module, configured to acquire a view resource of the display interface when the control type is the two-dimensional control type;
a first skin changing sub-module, configured to perform the skin changing on the display interface by applying the skin resource pack according to the view resource.

12. The apparatus according to claim 9, wherein the skin changing module (703) includes the following sub-modules:
a configuration classification sub-module, configured to determine color value information and image path information from the skin resource pack when the control type is the Kanzi view type;
a configuration information processing sub-module, configured to send the color value information to a Kanzi rendering engine for rendering, and load target image data according to the image path information;
a second skin changing sub-module, configured to draw a skin-changed display interface based on rendering content of the Kanzi rendering engine and the target image data.

13. The apparatus according to claim 9, wherein the skin changing module (703) includes the following sub-modules:
a pause and release sub-module, configured to pause a current drawing task and release caching information when the control type is the C++ application type;
a drawing restoration sub-module, configured to restore the current drawing task, and load a texture and a model associated with the display interface according to the skin resource pack.

14. A vehicle, **characterized in that**, comprising the skin changing apparatus for the display interface according to any one of claims 9-13.

15. A computer-readable storage medium on which a computer program (901) is stored, **characterized in that**, when the computer program is executed by a processor, steps of the skin changing method for the display interface according to any one of claims 1 to 8 are implemented.

## Patentansprüche

1. Skin-Änderungsverfahren für eine Anzeigeschnittstelle, **dadurch gekennzeichnet, dass** es Folgendes umfasst:
Erfassen (101, 203, 301, 401, 501), als Reaktion auf einen Anwendungsvorgang für ein Zielthema, eines Skin-Ressourcenpakets, das dem Zielthema in einem Zielanwendungsprogramm eines Autokonsolensystems entspricht;
Bestimmen (102, 204, 302, 402, 502) einer Steuerungsart für eine Anzeigeschnittstelle einer Vielzahl von Anwendungsprogrammen in dem Autokonsolensystem, wobei die Steuerungsart mindestens eine von einer zweidimensionalen Steuerungsart, einer Kanzi-Ansichtsart, einer C++-Anwendungsart oder einer Unity-Ansichtsart umfasst;
Ausführen (103, 205) einer Skin-Änderung an der Anzeigeschnittstelle durch Anwenden des Skin-Ressourcenpakets gemäß einem Skin-Änderungsablauf, welcher der Steuerungsart entspricht;
wobei der Skin-Änderungsablauf für jede Steuerungsart im Voraus eingestellt wird, und der Skin-Änderungsablauf, welcher der Steuerungsart entspricht, gemäß einer Entsprechung zwischen der Steuerungsart und dem Skin-Änderungsablauf bestimmt wird.

2. Verfahren nach Anspruch 1, wobei das Ausführen (103, 205) der Skin-Änderung an der Anzeigeschnittstelle durch Anwenden des Skin-Ressourcenpakets gemäß dem Skin-Änderungsablauf, welcher der Steuerungsart entspricht, umfasst:
wenn die Steuerungsart die zweidimensionale Steuerungsart ist, Erfassen (303) einer Ansichtsressource der Anzeigeschnittstelle;
Ausführen (304) der Skin-Änderung an der Anzeigeschnittstelle durch Anwenden des Skin-Ressourcenpakets gemäß der Ansichtsressource.

3. Verfahren nach Anspruch 1, wobei das Ausführen (103, 205) der Skin-Änderung an der Anzeigeschnittstelle durch Anwenden des Skin-Ressourcenpakets gemäß dem Skin-Änderungsablauf, welcher der Steuerungsart entspricht, umfasst:
wenn die Steuerungsart die Kanzi-Ansichtsart ist, Bestimmen (403) von Farbwertinformationen und Bildpfadinformationen aus dem Skin-Ressourcenpaket;
Senden (404) der Farbwertinformationen an eine Kanzi-Rendering-Engine zum Rendern und Laden von Zielbilddaten gemäß den Bildpfadinformationen;
Zeichnen (405) einer Anzeigeschnittstelle mit geändertem Skin basierend auf dem Rendering-Inhalt der Kanzi-Rendering-Engine und den Zielbilddaten.

4. Verfahren nach Anspruch 1, wobei das Ausführen (103, 205) der Skin-Änderung an der Anzeigeschnittstelle durch Anwenden des Skin-Ressourcenpakets gemäß dem Skin-Änderungsablauf, welcher der Steuerungsart entspricht, umfasst:
wenn die Steuerungsart die C++-Anwendungsart ist, Pausieren (503) einer aktuellen Zeichenaufgabe und Freigeben von Zwischenspeicherinformationen;
Wiederherstellen (504) der aktuellen Zeichenaufgabe und Laden einer Textur und eines Modells, die der Anzeigeschnittstelle gemäß dem Skin-Ressourcenpaket zugeordnet sind.

5. Verfahren nach einem der Ansprüche 1 bis 4, wobei vor dem Erfassen (101, 203, 301, 401, 501), als Reaktion auf den Anwendungsvorgang für das Zielthema, das Skin-Ressourcenpaket, das dem Zielthema entspricht, das Verfahren umfasst:
Integrieren eines ersten Software-Entwicklungskits in das Zielanwendungsprogramm, und Initialisieren des ersten Software-Entwicklungskits;
wobei das Erfassen, als Reaktion auf den Anwendungsvorgang für das Zielthema, des Skin-Ressourcenpakets, das dem Zielthema entspricht, umfasst:
Aufrufen, als Reaktion auf den Anwendungsvorgang für das Zielthema, des ersten Software-Entwicklungskits des Zielanwendungsprogramms, um das Skin-Ressourcenpaket von einem vorgegebenen Pfad zu empfangen.

6. Verfahren nach Anspruch 5, wobei vor dem Ausführen (103, 205) der Skin-Änderung an der Anzeigeschnittstelle durch Anwenden des Skin-Ressourcenpakets gemäß dem Skin-Änderungsablauf, welcher der Steuerungsart entspricht, das Verfahren umfasst:
Integrieren eines zweiten Software-Entwicklungskits in die Vielzahl von Anwendungsprogrammen in dem Autokonsolensystem, und Initialisieren des zweiten Software-Entwicklungskits;
Registrieren einer Benachrichtigungsmeldung des ersten Software-Entwicklungskits;
wobei das Ausführen der Skin-Änderung an der Anzeigeschnittstelle durch Anwenden des Skin-Ressourcenpakets gemäß dem Skin-Änderungsablauf, welcher der Steuerungsart entspricht, umfasst:
Aufrufen des ersten Software-Entwicklungskits des Zielanwendungsprogramms, um das Skin-Ressourcenpaket zu parsen, um Konfigurationsinformationen zu erzielen;
Generieren einer Benachrichtigungsmeldung, welche die Konfigurationsinformationen mitführt, wobei die Benachrichtigungsmeldung verwendet wird, um die Anwendungsprogramme in dem Autokonsolensystem zu benachrichtigen, eine Skin-Änderung auszuführen;
Senden der Benachrichtigungsmeldung an das zweite Software-Entwicklungskit der Vielzahl von Anwendungsprogrammen in dem Autokonsolensystem, um die Vielzahl von Anwendungsprogrammen zu steuern, um die Skin-Änderung an jeder Anzeigeschnittstelle durch Übernehmen der Konfigurationsinformationen gemäß dem Skin-Änderungsablauf, welcher der Steuerungsart entspricht, auszuführen.

7. Verfahren nach einem der Ansprüche 1 bis 4, wobei vor dem Erfassen (101, 203, 301, 401, 501), als Reaktion auf den Anwendungsvorgang für das Zielthema, des Skin-Ressourcenpakets, das dem Zielthema entspricht, in dem Zielanwendungsprogramm des Autokonsolensystems, das Verfahren ferner umfasst:
Erstellen (201) eines Zielthemas, und Anlegen einer Skin-Ressourcendatei, die dem Zielthema entspricht;
Verpacken (202) und Kompilieren der Skin-Ressourcendatei in ein Skin-Ressourcenpaket, und Aktualisieren des Skin-Ressourcenpakets in dem Zielanwendungsprogramm.

8. Verfahren nach Anspruch 7, wobei vor dem Verpacken (202) und Kompilieren der Skin-Ressourcendatei in das Skin-Ressourcenpaket das Verfahren ferner umfasst:
Erzielen von Zielbenennungsinformationen der Skin-Ressourcendatei;
wenn die Zielbenennungsinformationen eine voreingestellte Benennungsregel einhalten, Verpacken und Kompilieren der Skin-Ressourcendatei in das Skin-Ressourcenpaket.

9. Skin-Änderungsgerät für eine Anzeigeschnittstelle, wobei das Gerät umfasst:
ein Modul (701) zum Erfassen eines Skin-Ressourcenpakets, das dazu konfiguriert ist, als Reaktion auf einen Anwendungsvorgang für ein Zielthema, ein Skin-Ressourcenpaket, das dem Zielthema entspricht, in einem Zielanwendungsprogramm eines Autokonsolensystems zu erfassen;
ein Modul (702) zum Bestimmen einer Steuerungsart, das dazu konfiguriert ist, eine Steuerungsart für eine Anzeigeschnittstelle einer Vielzahl von Anwendungsprogrammen in dem Autokonsolensystem zu bestimmen, wobei die Steuerungsart mindestens eine von einer zweidimensionalen Steuerungsart, einer Kanzi-Ansichtsart, einer C++-Anwendungsart oder einer Unity-Ansichtsart umfasst;
ein Skin-Änderungsmodul (703), das dazu konfiguriert ist, eine Skin-Änderung an der Anzeigeschnittstelle durch Anwenden des Skin-Ressourcenpakets gemäß einem Skin-Änderungsablauf, welcher der Steuerungsart entspricht, auszuführen;
wobei der Skin-Änderungsablauf für jede Steuerungsart im Voraus eingestellt wird, und der Skin-Änderungsablauf, welcher der Steuerungsart entspricht, gemäß einer Entsprechung zwischen der Steuerungsart und dem Skin-Änderungsablauf bestimmt wird.

10. Gerät nach Anspruch 9, ferner umfassend:
ein Modul zum Erstellen eines Zielthemas, das dazu konfiguriert ist, das Zielthema zu erstellen und eine Skin-Ressourcendatei anzulegen, die dem Zielthema entspricht;
ein Modul zum Verpacken und Kompilieren, das dazu konfiguriert ist, die Skin-Ressourcendatei in ein Skin-Ressourcenpaket zu verpacken und zu kompilieren, und das Skin-Ressourcenpaket auf das Zielanwendungsprogramm zu aktualisieren.

11. Gerät nach Anspruch 9, wobei das Skin-Änderungsmodul (703) die folgenden Untermodule umfasst:
ein Untermodul zum Erfassen einer Ansichtsressource, das dazu konfiguriert ist, eine Ansichtsressource der Anzeigeschnittstelle zu erfassen, wenn die Steuerungsart die zweidimensionale Steuerungsart ist;
ein erstes Untermodul zur Skin-Änderung, das dazu konfiguriert ist, die Skin-Änderung an der Anzeigeschnittstelle durch Anwenden des Skin-Ressourcenpakets gemäß der Ansichtsressource auszuführen.

12. Gerät nach Anspruch 9, wobei das Skin-Änderungsmodul (703) die folgenden Untermodule umfasst:
ein Untermodul zum Klassifizieren einer Konfiguration, das dazu konfiguriert ist, Farbwertinformationen und Bildpfadinformationen aus dem Skin-Ressourcenpaket zu bestimmen, wenn die Steuerungsart die Kanzi-Ansichtsart ist;
ein Untermodul zum Verarbeiten von Konfigurationsinformationen, das dazu konfiguriert ist, die Farbwertinformationen an eine Kanzi-Rendering-Engine zum Rendern zu senden, und Zielbilddaten gemäß den Bildpfadinformationen zu laden;
ein zweites Untermodul zur Skin-Änderung, das dazu konfiguriert ist, eine Anzeigeschnittstelle mit geändertem Skin basierend auf dem Rendering-Inhalt der Kanzi-Rendering-Engine und den Zielbilddaten zu zeichnen.

13. Gerät nach Anspruch 9, wobei das Skin-Änderungsmodul (703) die folgenden Untermodule umfasst:
ein Untermodul zum Pausieren und Freigeben, das dazu konfiguriert ist, eine aktuelle Zeichenaufgabe zu pausieren und Zwischenspeicherinformationen freizugeben, wenn die Steuerungsart die C++-Anwendungsart ist;
ein Untermodul zum Wiederherstellen einer Zeichnung, das dazu konfiguriert ist, die aktuelle Zeichenaufgabe wiederherzustellen und eine Textur und ein Modell zu laden, die der Anzeigeschnittstelle gemäß dem Skin-Ressourcenpaket zugeordnet sind.

14. Fahrzeug, **dadurch gekennzeichnet, dass** es das Skin-Änderungsgerät für die Anzeigeschnittstelle nach einem der Ansprüche 9 bis 13 umfasst.

15. Computerlesbares Speichermedium, auf dem ein Computerprogramm (901) gespeichert ist, **dadurch gekennzeichnet, dass** wenn das Computerprogramm von einem Prozessor ausgeführt wird, die Schritte des Skin-Änderungsverfahrens für die Anzeigeschnittstelle nach einem der Ansprüche 1 bis 8 umgesetzt werden.

## Revendications

1. Procédé de changement de peau d'une interface d'affichage, **caractérisé en ce qu'**il comprend :
l'acquisition (101, 203, 301, 401, 501), en réponse à une opération d'application pour un thème cible, d'un pack de ressources de peau correspondant au thème cible dans un programme d'application cible d'un système de console automobile ;
la détermination (102, 204, 302, 402, 502) d'un type de commande pour une interface d'affichage d'une pluralité de programmes d'application dans le système de console automobile, le type de commande comprenant au moins un type de commande bidimensionnel, un type de vue Kanzi, un type d'application C++ ou un type de vue Unity ;
la réalisation (103, 205) d'un changement de peau sur l'interface d'affichage en appliquant le pack de ressources de peau selon un flux de changement de peau correspondant au type de commande ;
dans lequel le flux de changement de peau est défini à l'avance pour chaque type de commande, et le flux de changement de peau correspondant au type de commande est déterminé en fonction d'une correspondance entre le type de commande et le flux de changement de peau.

2. Procédé selon la revendication 1, dans lequel la réalisation (103, 205) du changement de peau sur l'interface d'affichage par application du pack de ressources de peau selon le flux de changement de peau correspondant au type de commande comprend :
lorsque le type de commande est le type de commande bidimensionnel, l'acquisition (303) d'une ressource de vue de l'interface d'affichage ;
la réalisation (304) du changement de peau sur l'interface d'affichage en appliquant le pack de ressources de peau en fonction de la ressource de vue.

3. Procédé selon la revendication 1, dans lequel la réalisation (103, 205) du changement de peau sur l'interface d'affichage par application du pack de ressources de peau selon le flux de changement de peau correspondant au type de commande comprend :
lorsque le type de commande est le type de vue Kanzi, la détermination (403) d'informations de valeur de couleur et d'informations de chemin d'image à partir du pack de ressources de peau ;
l'envoi (404) des informations de valeur de couleur à un moteur de rendu Kanzi pour le rendu, et le chargement des données d'image cible en fonction des informations de chemin d' image ;
le dessin (405) d'une interface d'affichage à peau modifiée en fonction du contenu de rendu du moteur de rendu Kanzi et des données d'image cible.

4. Procédé selon la revendication 1, dans lequel l'exécution (103, 205) du changement de peau sur l'interface d'affichage par application du pack de ressources de peau selon le flux de changement de peau correspondant au type de commande comprend :
lorsque le type de commande est le type d'application C++, la mise en pause (503) d'une tâche de dessin en cours et la libération des informations de mise en cache ;
la restauration (504) de la tâche de dessin en cours et le chargement d'une texture et d'un modèle associés à l'interface d'affichage en fonction du pack de ressources de peau.

5. Procédé selon l'une quelconque des revendications 1 à 4, dans lequel, avant l'acquisition (101, 203, 301, 401, 501), en réponse à l'opération d'application pour le thème cible, le pack de ressources de peau correspondant au thème cible, le procédé comprend :
l'intégration d'un premier kit de développement logiciel dans le programme d'application cible, et l'initialisation du premier kit de développement logiciel ;
l'acquisition, en réponse à l'opération d'application pour le thème cible, du pack de ressources de peau correspondant au thème cible comprend :
l'invocation, en réponse à l'opération d'application pour le thème cible, du premier kit de développement logiciel du programme d'application cible pour acquérir le pack de ressources de peau à partir d'un chemin spécifié.

6. Procédé selon la revendication 5, dans lequel, avant la réalisation (103, 205) du changement de peau sur l'interface d'affichage en appliquant le pack de ressources de peau selon le flux de changement de peau correspondant au type de commande, le procédé comprend :
l'intégration d'un deuxième kit de développement logiciel dans la pluralité de programmes d'application dans le système de console automobile, et l'initialisation du deuxième kit de développement logiciel ;
l'enregistrement d'un message de notification du premier kit de développement logiciel ;
l'exécution du changement de peau sur l'interface d'affichage en appliquant le pack de ressources de peau selon le flux de changement de peau correspondant au type de commande comprend :
l'invocation du premier kit de développement logiciel du programme d'application cible pour analyser le pack de ressources de peau, afin d'obtenir des informations de configuration ;
la génération d'un message de notification contenant les informations de configuration, le message de notification étant utilisé pour notifier les programmes d'application dans le système de console automobile d'effectuer un changement de peau ;
l'envoi du message de notification au deuxième kit de développement logiciel de la pluralité de programmes d'application dans le système de console automobile, pour commander la pluralité de programmes d'application pour effectuer un changement de peau sur chaque interface d'affichage en adoptant les informations de configuration en fonction du flux de changement de peau correspondant au type de commande.

7. Procédé selon l'une quelconque des revendications 1 à 4, dans lequel, avant d'acquérir (101, 203, 301, 401, 501), en réponse à l'opération d'application pour le thème cible, le pack de ressources de peau correspondant au thème cible dans le programme d'application cible du système de console automobile, le procédé comprend en outre :
la création (201) d'un thème cible et la création d'un fichier de ressources de peau correspondant au thème cible ;
la compression (202) et la compilation du fichier de ressources de peau dans un pack de ressources de peau, et la mise à jour du pack de ressources de peau dans le programme d'application cible.

8. Procédé selon la revendication 7, dans lequel, avant la compression (202) et la compilation du fichier de ressources de peau dans le pack de ressources de peau, le procédé comprend en outre :
l'obtention d'informations de dénomination de cible du fichier de ressources de peau ;
lorsque les informations de dénomination de cible sont conformes à une règle de dénomination prédéfinie, la compression et la compilation du fichier de ressources de peau dans le pack de ressources de peau.

9. Appareil de changement de peau pour une interface d'affichage, l'appareil comprenant :
un module d'acquisition de pack de ressources de peau (701), configuré pour acquérir, en réponse à une opération d'application pour un thème cible, un pack de ressources de peau correspondant au thème cible dans un programme d'application cible d'un système de console automobile ;
un module de détermination de type de commande (702), configuré pour déterminer un type de commande pour une interface d'affichage d'une pluralité de programmes d'application dans le système de console automobile, le type de commande comprenant au moins un type de commande bidimensionnel, un type de vue Kanzi, un type d'application C++ ou un type de vue Unity ;
un module de changement de peau (703), configuré pour effectuer un changement de peau sur l'interface d'affichage en appliquant le pack de ressources de peau selon un flux de changement de peau correspondant au type de commande ;
dans lequel le flux de changement de peau est défini à l'avance pour chaque type de commande, et le flux de changement de peau correspondant au type de commande est déterminé en fonction d'une correspondance entre le type de commande et le flux de changement de peau.

10. Appareil selon la revendication 9, comprenant en outre :
un module de création de thème cible, configuré pour créer le thème cible et créer un fichier de ressources de peau correspondant au thème cible ;
un module de compression et de compilation, configuré pour compresser et compiler le fichier de ressources de peau dans un pack de ressources de peau, et mettre à jour le pack de ressources de peau vers le programme d'application cible.

11. Appareil selon la revendication 9, dans lequel le module de changement de peau (703) comprend les sous-modules suivants :
un sous-module d'acquisition de ressources de vue, configuré pour acquérir une ressource de vue de l'interface d'affichage lorsque le type de commande est le type de commande bidimensionnel ;
un premier sous-module de changement de peau, configuré pour effectuer le changement de peau sur l'interface d'affichage en appliquant le pack de ressources de peau en fonction de la ressource de vue.

12. Appareil selon la revendication 9, dans lequel le module de changement de peau (703) comprend les sous-modules suivants :
un sous-module de classification de configuration, configuré pour déterminer les informations de valeur de couleur et les informations de chemin d'image à partir du pack de ressources de peau lorsque le type de commande est le type de vue Kanzi ;
un sous-module de traitement d'informations de configuration, configuré pour envoyer les informations de valeur de couleur à un moteur de rendu Kanzi pour le rendu, et charger les données d'image cible en fonction des informations de chemin d'image ;
un deuxième sous-module de changement de peau, configuré pour dessiner une interface d'affichage à peau modifiée en fonction du contenu de rendu du moteur de rendu Kanzi et des données d'image cible.

13. Appareil selon la revendication 9, dans lequel le module de changement de peau (703) comprend les sous-modules suivants :
un sous-module de pause et de libération, configuré pour suspendre une tâche de dessin en cours et libérer les informations de mise en cache lorsque le type de commande est le type d'application C++ ;
un sous-module de restauration de dessin, configuré pour restaurer la tâche de dessin en cours et charger une texture et un modèle associés à l'interface d'affichage en fonction du pack de ressources de peau.

14. Véhicule, **caractérisé en ce qu'**il comprend l'appareil de changement de peau pour l'interface d'affichage selon l'une quelconque des revendications 9 à 13.

15. Support de stockage lisible par ordinateur sur lequel est stocké un programme informatique (901), **caractérisé en ce que**, lorsque le programme informatique est exécuté par un processeur, les étapes du procédé de changement de peau de l'interface d'affichage selon l'une quelconque des revendications 1 à 8 sont mises en œuvre.
